# EUROPEAN PATENT SPECIFICATION

(11) **EP 3 205 163 B1**
(45) Date of publication and mention of the grant of the patent: **26.09.2018**
(21) Application number: 15710018.1
(22) Date of filing: 06.02.2015
(51) Int. Cl.: H04W 72/08

(54) **SYSTEMS AND METHODS RELATED TO FLEXIBLE CSI-RS CONFIGURATION AND ASSOCIATED FEEDBACK**
SYSTEME UND VERFAHREN IM ZUSAMMENHANG MIT FLEXIBLER CSI-RS-KONFIGURATION UND ZUGEHÖRIGE RÜCKKOPPLUNG
SYSTÈMES ET PROCÉDÉS RELATIFS À UNE CONFIGURATION FLEXIBLE DE CSI-RS ET À UN RETOUR ASSOCIÉ

(30) Priority: 10.10.2014 US 201462062231 P
(43) Date of publication of application: 16.08.2017
(73) Proprietor: Telefonaktiebolaget LM Ericsson (publ), 164 83 Stockholm (SE)
(72) Inventor: FURUSKOG, Johan, S-112 49 Stockholm (SE); FRENNE, Mattias, S-754 43 Uppsala (SE); ANDERSSON, Håkan, S-585 99 Linköping (SE); ZHANG, Qiang, S-187 73 Täby (SE)
(74) Representative: Ericsson
(86) International application number: PCT/SE2015/050133
(87) International publication number: WO 2016/056970

(56) References cited:
- WO-A1-2013/166923
- WO-A1-2013/169170

## Description

### Field of the Disclosure

The present disclosure relates to Channel State Information Reference Signal (CSI-RS) configuration and associated feedback in a cellular communications network.

### Background

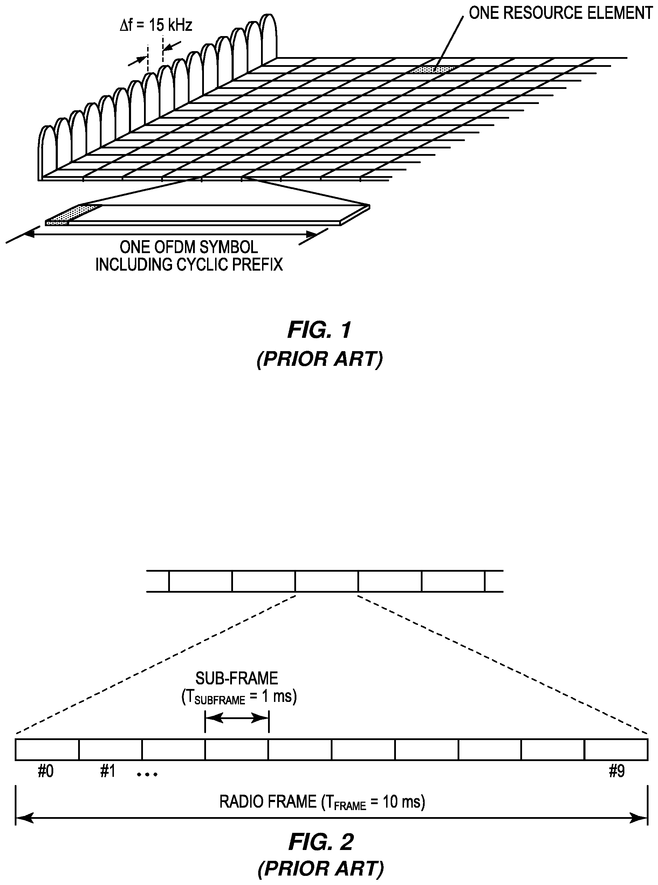

Long-Term Evolution (LTE) uses Orthogonal Frequency-Division Multiplexing (OFDM) in the downlink and Discrete Fourier Transform (DFT) - spread OFDM in the uplink. The basic LTE downlink physical resource can thus be seen as a time-frequency grid as illustrated in Figure 1, where each resource element corresponds to one OFDM subcarrier during one OFDM symbol interval.

As illustrated in Figure 2, in the time domain, LTE downlink transmissions are organized into radio frames of 10 milliseconds (ms), each radio frame consisting of ten equally-sized subframes of length T_{SUBFRAME} = 1 ms. For normal cyclic prefix, one subframe consists of 14 OFDM symbols. The duration of each OFDM symbol is approximately 71.4 microseconds (µs).

Furthermore, the resource allocation in LTE is typically described in terms of Resource Blocks (RBs), where a RB corresponds to one slot (0.5 ms) in the time domain and 12 contiguous subcarriers in the frequency domain. A pair of two adjacent RBs in the time direction (1.0 ms) is known as a RB pair. RBs are numbered in the frequency domain starting with 0 from one end of the system bandwidth.

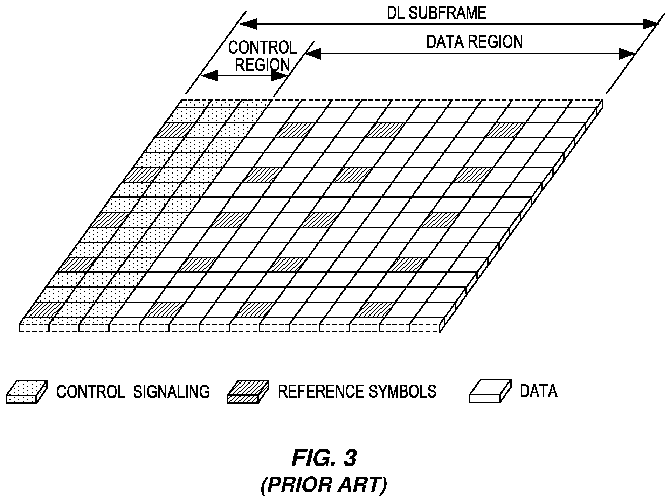

Downlink transmissions are dynamically scheduled. In particular, in each subframe, the base station transmits control information about the terminals (i.e., User Equipment devices (UEs)) to which data is transmitted in the current downlink subframe. This control signaling, which is carried over the Physical Downlink Control Channel (PDCCH), is typically transmitted in the first 1, 2, 3, or 4 OFDM symbols in each subframe, where the number n = 1, 2, 3, or 4 is known as the Control Format Indicator (CFI). The downlink subframe also contains common reference symbols, which are known to the receiver and used for coherent demodulation of, e.g., the control information. A downlink system with CFI = 3 OFDM symbols as control is illustrated in Figure 3.

From LTE Release 11 onwards, the above-described resource assignments can also be scheduled on the Enhanced Physical Downlink Control Channel (EPDCCH). For Release 8 to Release 10 only the PDCCH is available.

The reference symbols shown in Figure 3 are the Cell-Specific Reference Symbols (CRSs). The CRSs are used to support multiple functions including fine time- and frequency-synchronization and channel estimation for certain transmission modes.

In a cellular communications system, there is a need to measure the channel conditions in order to know what transmission parameters to use. These parameters include, e.g., modulation type, coding rate, transmission rank, and frequency allocation. This applies to Uplink (UL) as well as Downlink (DL) transmissions.

The scheduler that makes the decisions on the transmission parameters is typically located in the base station (i.e., the enhanced or evolved Node B (eNB)). Hence, the scheduler can measure channel properties of the UL directly using known reference signals that the terminals (i.e., UEs) transmit. These measurements then form a basis for the UL scheduling decisions that the eNB makes, which are then sent to the UEs via a DL control channel. Conversely, for the DL, the scheduler receives Channel State Information (CSI) feedback from the terminals, which is taken into consideration by the scheduler when selecting the transmission parameters for the DL transmissions to those terminals.

In LTE Release 8, CRSs are used in the downlink for CSI estimation and feedback, and for channel estimation for demodulation. CRSs are transmitted in every subframe and are defined to support up to four Antenna Ports (APs). In LTE Release 10, to support up to eight APs, CSI Reference Signals (CSI-RSs) are defined for the UE to measure and feed back CSI relating to the multiple APs. Each CSI-RS resource consists of two Resource Elements (REs) over two consecutive OFDM symbols, and two different CSI-RSs (for two different APs) can share the same CSI-RS resource (two REs) by Code-Division Multiplexing (CDM). Also, a CSI-RS can be transmitted once per 5, 10, 20, 40, or 80 ms, where this timing is referred to as the CSI-RS periodicity. Therefore, CSI-RS has lower overhead and lower duty-cycle as compared to CRS. On the other hand, unlike CRS, CSI-RS is not used as a demodulation reference. Different CSI-RSs can also be transmitted with different offsets in the subframe, where the offset of the CSI-RS within the subframe is referred to as the CSI-RS subframe offset. When a CSI-RS is configured, the UE measures the channel for a given AP at each time instant and may interpolate the channel in between CSI-RS occasions to estimate the dynamically varying channel, e.g., by one interpolated sample per 1 ms instead of, e.g., one measured sample each 5 ms.

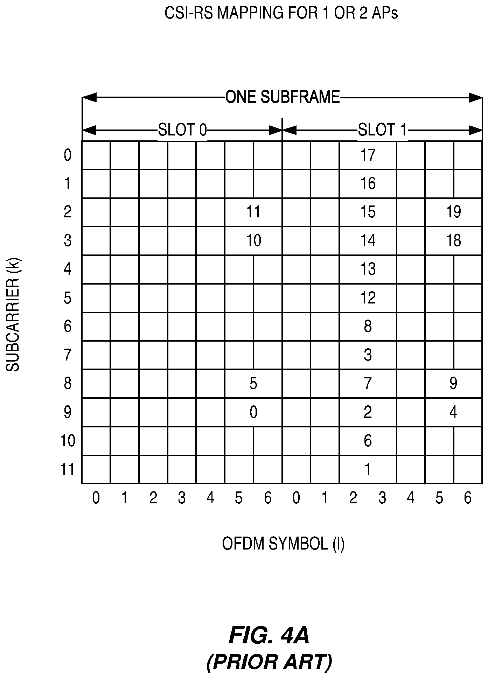

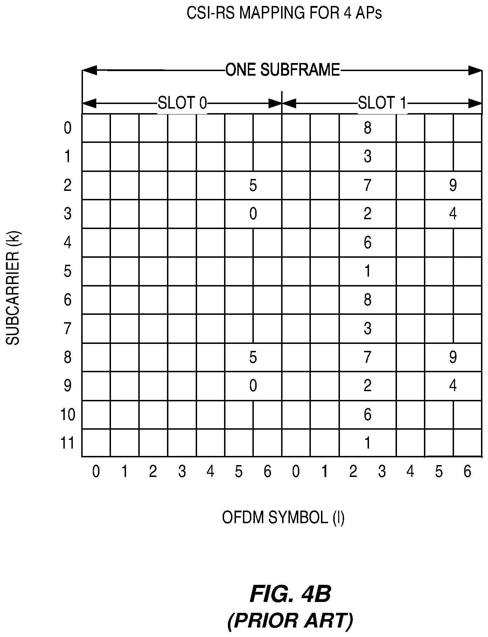

Figures 4A and 4B show examples of mappings from different CSI-RS configurations to REs in a RB pair. Figure 4A illustrates the mapping for one or two APs, where 20 configurations are possible. The two CSI-RSs of the two APs of a particular cell can be transmitted by, for instance, configuration 0 by CDM, while CSI-RSs of APs of other neighboring cells can be transmitted by configuration j, with 1 < = j < = 19, to avoid reference signal collisions with the CSI-RS in the cell. Figure 4B shows the mapping for four APs, where 10 configurations are possible. The four CSI-RS of the four APs of a particular cell can be transmitted by, for instance, configuration 0 by CDM, while CSI-RSs of APs of other neighboring cells can be transmitted by configuration j, with 1 < = j < = 9.

The OFDM symbols used by the two consecutive REs for one CSI-RS are Quadrature Phase-Shift Keying (QPSK) symbols, which are derived from a specified pseudo-random sequence. To randomize the interference, the initial state of the pseudo-random sequence generator is determined by the detected cell Identifier (ID) or a virtual cell ID configured to the UE by Radio Resource Control (RRC) signaling. CSI-RS with such non-zero-power OFDM symbols are called Non-Zero-Power (NZP) CSI-RS (NZP CSI-RS).

On the other hand, Zero-Power (ZP) CSI-RS can also be RRC-configured to the UE for the purpose of Interference Measurement (IM) (in Transmission Mode 10 (TM10) only), or for the purpose of improving the CSI-estimation in other cells (in Transmission Mode 9 (TM9) or TM10). However, the CSI-RS mapping with four APs will always be used by the ZP CSI-RS. For example, in Figure 4B, if configuration 0 with NZP CSI-RS is used by cell A to estimate the CSI of the two APs in cell A, configuration 0 with ZP CSI-RS (a total of four REs per RB pair) can be used by the neighboring cell B to minimize the DL interference to cell A over the four REs in configuration 0, such that the CSI estimation of the two APs in cell A can be improved.

In LTE TM10, up to four CSI-processes can be configured for a UE by RRC-signaling. These four CSI-processes can, for instance, be used to acquire CSI for APs in up to four different cells (or Transmission Points (TPs) within the same cell) in a Coordinated Multipoint (CoMP) framework. The four CSI-processes can also be assigned to multiple different beams transmitted from the same eNB using an array antenna that is capable of beamforming in azimuth, elevation, or both (i.e., Two-Dimensional (2D) beamforming). See 3^{rd} Generation Partnership Project (3GPP) Technical Specification (TS) 36.213 V12.3.0, 3GPP TS 36.331 V12.3.0, and 3GPP TS 36.211 V12.3.0 for complete LTE specifications on how CSI-processes and CSI-RS-configurations are set up.

In order for the UE to derive the correct CSI, each CSI-process in TM10 is associated with a signal hypothesis and an interference hypothesis. The signal hypothesis describes which NZP CSI-RS reflects the desired signal. The interference is measured in a configured CSI-IM resource, which is similar to a CSI-RS with four REs per Physical Resource Block (PRB) pair, which the UE uses for interference measurements. To better support the IM in CoMP, CSI-IM is standardized and is based on the ZP CSI-RS. Therefore, each of the up to four CSI-processes consists of one NZP CSI-RS and one CSI-IM.

For a TM9 UE, only a single CSI-process can be configured, and no CSI-IM is defined. The IM is thus unspecified in TM9. There is however still a possibility to get CSI-feedback from two different Subframe (SF) sets: SF set 1 and SF set 2. For instance, based on, e.g., the Requests Per Service Flow (RPSF) information signaled over X2, a pico eNB can configure a UE to feed back CSI for both protected (i.e., RPSF) subframes (where a corresponding macro eNB has reduced activity) and CSI for unprotected subframes in two different CSI reports. This gives the pico eNB information to perform link adaptation in the two types of subframes differently, depending on whether it is a protected subframe or not. It is also possible for a UE configured in TM10 to use both subframe sets and multiple CSI-processes.

In LTE, the format of the CSI-reports are specified in detail and may contain Channel-Quality Information (CQI), Rank Indicator (RI), and Precoding Matrix Indicator (PMI). See 3GPP TS 36.213 V12.3.0. The reports can be wideband or applicable to subbands. They can be configured by a RRC message to be sent periodically or in an aperiodic manner or triggered by a control message from the eNB to a UE. The quality and reliability of the CSI are crucial for the eNB in order to make the best possible scheduling decisions for the upcoming DL transmissions.

The LTE standard does not specify how the UE should obtain and average the CSI-RS and CSI-IM measurements from multiple time instants, i.e., subframes. For example, the UE may measure over a time frame unknown to the eNB and combine several measurements in a UE-proprietary way to create the CSI values that are reported, either periodically or triggered.

In the context of LTE, the resources (i.e., the REs) available for transmission of CSI-RS are referred to as "CSI-RS resources." In addition, there are also "CSI-IM resources," where IM stands for "Interference Measurement." The latter are defined from the same set of possible physical locations in the time/frequency grid as the CSI-RS, but with zero power, hence ZP CSI-RS. In other words, they are "silent" CSI-RSs and when the eNB is transmitting the shared data channel, it avoids mapping data to those REs used for CSI-IM. These are intended to give a UE the possibility to measure the power of any interference from another transmitter other than the serving node of the UE.

Each UE can be configured with one, three, or four different CSI-processes. Each CSI-process is associated with one CSI-RS and one CSI-IM resource where these CSI-RS-resources have been configured to the UE by RRC-signaling and are thus periodically transmitted/occurring with a periodicity of T and with a given subframe offset relative to the frame start.

If only one CSI-process is used, then it is common to let the CSI-IM reflect the interference from all other eNBs, i.e., the serving cell uses a ZP CSI-RS that overlaps with the CSI-IM, but in other adjacent eNBs there is no ZP CSI-RS on these resources. In this way the UE will measure the interference from adjacent cells using the CSI-IM.

If additional CSI-processes are configured to the UE, then there is possibility for the network to also configure a ZP CSI-RS resource in the adjacent eNB that overlaps with a CSI-IM resource for this CSI-process for the UE in the serving eNB. In this way the UE will feed back accurate CSI also for the case when this adjacent cell is not transmitting. Hence, coordinated scheduling between eNBs is enabled with the use of multiple CSI-processes and one CSI-process feeds back CSI for the full interference case and the other CSI-process feeds back CSI for the case when a (strongly interfering) adjacent cell is muted. As mentioned above, up to four CSI-processes can be configured to the UE, thereby enabling feedback of four different transmission hypotheses.

The PDCCH/EPDCCH is used to carry Downlink Control Information (DCI) such as scheduling decisions and power-control commands. More specifically, the DCI includes:
- DL scheduling assignments, including Physical Downlink Shared Channel (PDSCH) resource indication, transport format, hybrid Automatic Repeat Request (ARQ) information, and control information related to spatial multiplexing (if applicable). A DL scheduling assignment also includes a command for power control of the Physical Uplink Control Channel (PUCCH) used for transmission of hybrid ARQ acknowledgements in response to DL scheduling assignments.
- UL scheduling grants, including Physical Uplink Shared Channel (PUSCH) resource indication, transport format, and hybrid ARQ related information. A UL scheduling grant also includes a command for power control of the PUSCH.
- Power-control commands for a set of terminals as a complement to the commands included in the scheduling assignments/grants.

One PDCCH/EPDCCH carries one or more DCI messages, each with one of the formats above. As multiple terminals can be scheduled simultaneously, on both DL and UL, there must be a possibility to transmit multiple scheduling messages within each subframe. Each scheduling message is transmitted on separate PDCCH/EPDCCH resources. Furthermore, to support different radio channel conditions, link adaptation can be used, where the code rate of the PDCCH/EPDCCH is selected by adapting the resource usage for the PDCCH/EPDCCH, to match the radio channel conditions.

Against this backdrop, future cellular communications networks are expected to utilize beamforming where the number of beams may exceed the number of CSI-RS resources. In addition, existing and future cellular communications networks sometimes use a multi-layer radio-access network including a number of coverage cells (e.g., macro cells controlled by eNBs) and a number of capacity cells (e.g., pico cells controlled by pico eNBs). As such, there is a need for systems and methods that enable improved CSI-RS configuration, particularly for cellular communications that utilize beamforming and/or multi-layer radio-access networks.

WO 2013/166923 A1 describes a method and a base station for instruction signalling and configuring of CSI feedback from a wireless device. The base station notifies a terminal a CSI-RS resource for measuring CSI and instructs the terminal to feed back the CSI corresponding to the CSI-RS resource. In this way, the base station side may flexibly configure the terminal side to feed back various kinds of CSI information, thus enabling the base station to flexibly and dynamically acquire the CSI.

### Summary

The invention is set out in the appended set of claims. The embodiments and/or examples of the following description which are not covered by the appended claims are considered as not being part of the present invention. Systems and methods related to flexible Channel State Information (CSI) configuration and feedback are disclosed. In some embodiments, a method of operation of a network node in a cellular communications network to configure CSI Reference Signal (CSI-RS) resources for a wireless device is provided. In some embodiments, the method of operation of the network node comprises configuring a set of CSI-RS resources for the wireless device and dynamically configuring, for the wireless device, measurement purposes for CSI-RS resources comprised in the set of CSI-RS resources configured for the wireless device. In this manner, flexible CSI configuration and, as a result, flexible CSI feedback is provided.

Embodiments disclosed herein are particularly well suited when the network node utilizes beamformed CSI-RS. When using beamformed CSI-RS, the wireless device may quickly fall outside the main lobe of a beam and therefore need CSI-RS configuration. Conventional CSI-RS reconfiguration is slow. In contrast, embodiments of the present disclosure enable fast, dynamic CSI-RS reconfiguration as needed or desired. Similar benefits can be obtained in a multi-layer network where the wireless device may quickly move from, e.g., one small cell to another.

In some embodiments, the method of operation of the network node further comprises receiving a report of one or more preferred CSI-RS hypotheses selected by the wireless device from the set of CSI-RS resources. Further, in some embodiments, the one or more preferred CSI-RS hypotheses are selected by the wireless device from a plurality of CSI-RS hypotheses formed from the set of CSI-RS resources configured for the wireless device based on the measurement purposes configured for the plurality of CSI-RS resources comprised in the set of CSI-RS resources.

Still further, in some embodiments, for each CSI-RS resource, the measurement purpose of the CSI-RS resource is one of a group consisting of: a desired CSI-RS resource measurement purpose, an interfering CSI-RS resource measurement purpose, and an external interfering CSI-RS resource measurement purpose, and each CSI-RS hypothesis comprises at least one of a group consisting of: one or more of the plurality of CSI-RS resources configured with the desired CSI-RS resource measurement purpose, one or more of the plurality of CSI-RS resources configured with the interfering CSI-RS resource measurement purpose, and one or more of the plurality of CSI-RS resources configured with the external interfering CSI-RS resource measurement purpose.

In some embodiments, each of the one or more preferred CSI-RS hypotheses comprises one or more of the CSI-RS resources that are configured with the desired CSI-RS resource measurement purpose, and the report comprises an indication of the one or more of the plurality of CSI-RS resources that are configured with the desired CSI-RS resource measurement purpose and comprised in the one or more preferred CSI-RS hypotheses. In some embodiments, at least one of the preferred CSI-RS hypotheses comprises at least one additional CSI-RS resource of a group consisting of: one or more of the plurality of CSI-RS resources configured with the interfering CSI-RS resource measurement purpose and one or more of the plurality of CSI-RS resources configured with the external interfering CSI-RS resource measurement purpose, and the report further comprises an indication of the at least one additional CSI-RS resource comprised in the at least one of the one or more preferred CSI-RS hypotheses.

In some embodiments, the method of operation of the network node further comprises receiving values for one or more feedback metrics for the wireless device for the one or more preferred CSI-RS hypotheses. Further, in some embodiments, the one or more feedback metrics comprise at least one of a group consisting of: Channel Quality Information (CQI), Precoding Matrix Indicator (PMI), and rank.

In some embodiments, for each CSI-RS resource, the measurement purpose of the CSI-RS resource is one of a group consisting of: a desired CSI-RS resource measurement purpose, an interfering CSI-RS resource measurement purpose, and an external interfering CSI-RS resource measurement purpose.

In some embodiments, configuring the set of CSI-RS resources for the wireless device comprises statically or semi-statically configuring the set of CSI-RS resources for the wireless device. Further, in some embodiments, statically or semi-statically configuring the set of CSI-RS resources for the wireless device comprises configuring the set of CSI-RS resources for the wireless device via Radio-Resource Control (RRC) signaling.

In some embodiments, dynamically configuring the measurement purposes for the CSI-RS resources comprises dynamically configuring the measurement purposes for the CSI-RS resources via Downlink Control Information (DCI) messages.

In some embodiments, the CSI-RS resources for which the measurement purposes are dynamically configured are less than all CSI-RS resources in the set of CSI-RS resources configured for the wireless device. In other embodiments, the CSI-RS resources configured for the wireless device are all CSI-RS resources in the set of CSI-RS resources configured for the wireless device.

Embodiments of a network node are also disclosed.

Embodiments of a method of operation of a wireless device in a cellular communications network are also disclosed. In some embodiments, the method of operation of the wireless device comprises receiving, from the cellular communications network, an indication of a set of CSI-RS resources configured for the wireless device; receiving, from the cellular communications network, an indication of measurement purposes configured for a plurality of CSI-RS resources comprised in the set of CSI-RS resources; forming a plurality of CSI-RS hypotheses from the set of CSI-RS resources based on the measurement purposes configured for the plurality of CSI-RS resources comprised in the set of CSI-RS resources; computing a metric for each of the plurality of CSI-RS hypotheses; and selecting one or more preferred CSI-RS hypotheses from the plurality of CSI-RS hypotheses based on the metrics computed for the plurality of CSI-RS hypotheses.

In some embodiments, the measurement purposes configured for the plurality of CSI-RS resources comprise at least two different measurement purposes such that a different subset of the plurality of CSI-RS resources is configured with each of the at least two different measurement purposes, the different subsets of the plurality of CSI-RS resources configured for the at least two different measurement purposes being disjoint subsets, and forming the plurality of CSI-RS hypotheses comprises forming the plurality of CSI-RS hypotheses such that each CSI-RS hypothesis of the plurality of CSI-RS hypotheses comprises a different combination of one or more CSI-RS resources from each of the different subsets of the plurality of CSI-RS resources configured for the at least two different measurement purposes.

In some embodiments, the at least two different measurement purposes configured for the plurality of CSI-RS resources comprise at least two of a group consisting of: a desired CSI-RS resource measurement purpose, an interfering CSI-RS resource measurement purpose, and an external interfering CSI-RS resource measurement purpose.

In some embodiments, the metric computed for each of the plurality of CSI-RS hypotheses is expected throughput summed over all transmission layers for a downlink to the wireless device such that computing the metric for each of the plurality of CSI-RS hypotheses comprises computing, for each CSI-RS hypothesis of the plurality of CSI-RS hypotheses, the expected throughput summed over all transmission layers for the downlink to the wireless device according to the CSI-RS hypothesis. In some embodiments, selecting the one or more preferred CSI-RS hypotheses comprises selecting one or more of the plurality of CSI-RS hypotheses having the highest expected throughput as the one or more preferred CSI-RS hypotheses. In some embodiments, the method of operation of the wireless device further comprises reporting the one or more preferred CSI-RS hypotheses to the cellular communications network.

In some embodiments, the method of operation of the wireless device further comprises computing values for one or more feedback metrics for the wireless device for each of the one or more preferred CSI-RS hypotheses, and reporting the values computed for the one or more feedback metrics for the wireless device for each of the one or more preferred CSI-RS hypotheses to the cellular communications network. Further, in some embodiments, the one or more feedback metrics comprise at least one of a group consisting of: CQI, PMI, and rank.

In some embodiments, receiving the indication of the set of CSI-RS resources for the wireless device comprises receiving the indication of the set of CSI-RS resources via a static or semi-static configuration. Further, in some embodiments, receiving the indication of the set of CSI-RS resources via the static or semi-static configuration comprises receiving the indication of the set of CSI-RS resources for the wireless device via RRC-signaling.

In some embodiments, receiving the indication of the measurement purposes configured for the plurality of CSI-RS resources comprised in the set of CSI-RS resources comprises receiving the indication of the measurement purposes for the plurality of CSI-RS resources comprised in the set of CSI-RS resources via dynamic configuration. Further, in some embodiments, receiving the indication of the measurement purposes for the plurality of CSI-RS resources comprised in the set of CSI-RS resources via dynamic configuration comprises receiving the indication of the measurement purposes for the plurality of CSI-RS resources comprised in the set of CSI-RS resources via a DCI message.

In some embodiments, the plurality of CSI-RS resources is less than all CSI-RS resources in the set of CSI-RS resources configured for the wireless device. In other embodiments, the plurality of CSI-RS resources is all CSI-RS resources in the set of CSI-RS resources configured for the wireless device.

Embodiments of a wireless device for operation in a cellular communications network are further disclosed.

Those skilled in the art will appreciate the scope of the present disclosure and realize additional aspects thereof after reading the following detailed description of the embodiments in association with the accompanying drawing figures.

### Brief Description of the Drawing Figures

The accompanying drawing figures incorporated in and forming a part of this specification illustrate several aspects of the disclosure, and together with the description serve to explain the principles of the disclosure.
Figure 1 illustrates the Long-Term Evolution (LTE) downlink physical resource;
Figure 2 illustrates the LTE time-domain structure;
Figure 3 illustrates a downlink subframe;
Figures 4A and 4B illustrate configurations of Channel State Information Reference Signal (CSI-RS) for different numbers of antenna ports;
Figure 5 illustrates one example of a cellular communications network implementing flexible Channel State Information (CSI) feedback according to some embodiments of the present disclosure;
Figure 6 illustrates the operation of the base station and the wireless device of Figure 5 according to some embodiments of the present disclosure;
Figure 7 illustrates the operation of the base station and the wireless device of Figure 5 according to some other embodiments of the present disclosure;
Figure 8 is a block diagram of the base station according to some embodiments of the present disclosure;
Figure 9 is a block diagram of the base station according to other embodiments of the present disclosure;
Figure 10 is a block diagram of the wireless device according to some embodiments of the present disclosure; and
Figure 11 is a block diagram of the wireless device according to other embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

Note that although terminology from 3^{rd} Generation Partnership Program (3GPP) Long-Term Evolution (LTE) has been used in this disclosure to exemplify the embodiments of the present disclosure, this should not be seen as limiting the scope of the concepts disclosed herein to only the aforementioned system. Other wireless systems, including Wideband Code-Division Multiple Access (WCDMA), WiFi, WiMax, LTE for unlicensed band, Ultra-Mobile Broadband (UMB), and Global System for Mobile Communications (GSM), may also benefit from exploiting the ideas covered within this disclosure.

Also note that terminology such as enhanced or evolved Node B (eNB) and User Equipment (UE) should be considered as non-limiting and, in particular, does not imply a certain hierarchical relationship between the eNB and the UE. In general, "eNB" or "Transmission Point (TP)" could be considered as device 1 and "UE" as device 2, and these two devices communicate with each other over some radio channel. The disclosure also focuses on wireless transmissions in the downlink, but the disclosure is equally applicable in the uplink.

Before describing embodiments of the present disclosure, a discussion of some problems associated with conventional Channel State Information Reference Signal (CSI-RS) is beneficial. Some problems addressed in this disclosure relate to an eNB that transmits beamformed CSI-RSs. Hence, each CSI-RS is associated with a certain, potentially narrow, beam transmitted from, e.g., an array antenna. The UE thus measures the channel quality of multiple beams using multiple CSI-RSs and then identifies a desired beam or a desired set of beams for downlink transmissions to the UE. In this CSI-RS beaming scenario, one particular problem is how to dynamically assign, to the UE, CSI-RS (beams in this context) on which the UE is to perform measurements. Since a beam is associated with a single-layer transmission (or at most a dual-layer transmission if a dual-polarized antenna is used), another problem is how to perform feedback of desired transmission rank larger than two (i.e., more than a single received transmit beam).

Yet another problem is how to obtain accurate Channel State Information (CSI) feedback assuming multiple active beams where the UE is not receiving data in all of the active beams. This is the Multiuser Multiple-Input Multiple-Output (MU-MIMO) CSI problem where the UE does not know which beams are interfering when computing Channel Quality Information (CQI). Another problem is that the CSI Interference Measurement (IM) for the UE is higher-layer configured. This limits the flexibility of CSI-IM configuration in Coordinated Multipoint (CoMP) interference hypothesis measurements.

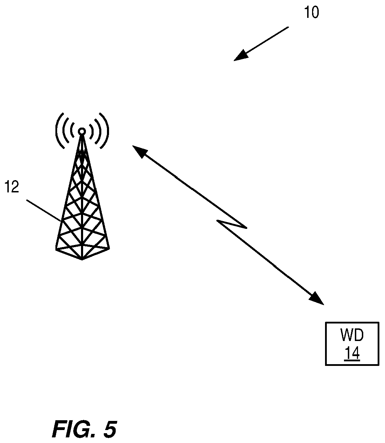

Embodiments of systems and methods for flexible CSI configuration and feedback are disclosed that, in some implementations or embodiments, address some or all of the problems described above. In particular, embodiments of the present disclosure are implemented in a cellular communications network 10, such as that illustrated in Figure 5. As illustrated, the cellular communications network 10 includes a base station 12 (e.g., an eNB) serving a wireless device 14 (e.g., a UE). For simplicity and ease of discussion, only one base station 12 and one wireless device 14 are illustrated, but it should be understood that the cellular communications network 10 may include any number of base stations 12 serving any number of wireless devices 14. Also, while not illustrated, in some embodiments, the cellular communications network 10 may implement a multi-layer radio-access network including, e.g., a layer of coverage cells (e.g., cells controlled by a number of macro or high-power base stations 12 (e.g., eNBs)) and a layer of capacity cells (e.g., cells controlled by a number of pico/femto/home or low-power base stations 12 (e.g., pico/femto/home eNBs)). Note that while the base stations 12 are described as performing some of the functionality disclosed herein, the concepts are equally applicable to any type of radio-access node that desires to configure CSI measurements by the wireless device 14. The base stations 12 are connected to a core network (not shown).

In some embodiments, the base station 12 transmits multiple beams via, e.g., an antenna array. The number of beams may be greater than and potentially much greater than the number of available CSI-RS configurations. One CSI-RS resource consists of multiple REs and is equivalent to one CSI-RS configuration. For example, currently in LTE, the number of available CSI-RS configurations is twenty for the case of 1 or 2 APs and 10 in the case of 4 APs (as illustrated in Figures 4A and 4B), and the number of beams transmitted by the base station 12 may be much greater than 10 or 20. In this scenario, a unique CSI-RS cannot be transmitted on each beam with unique configurations such that a UE would be able to distinguish the CSI-RS on one beam from the CSI-RS on another beam using the same configuration. Further, as the wireless device 14 moves within the coverage area, or cell, of the base station 12, the best or desired beam for downlink transmission to the wireless device 14 as well as the interfering beams (intra-cell) and external interfering beams (from neighboring cells) may frequently change. Conventional CSI-RS configuration procedures do not provide the flexibility needed to dynamically configure the CSI-RS resources on which the wireless device 14 is to measure to provide selection of the best beam and downlink transmission parameters in this scenario.

The base station 12 operates to provide dynamic CSI-RS configuration for the wireless device 14. In this context, as used herein "dynamic" CSI-RS configuration is configuration of CSI-RSs in each subframe or transmit time interval or at least configuration of CSI-RSs in such a manner that this configuration can be performed each subframe or transmit time interval if desired. This dynamic CSI-RS configuration enables the wireless device 14 to, e.g., provide improved feedback to the base station 12 for beam selection for the desired downlink transmissions to the wireless device 14 as well as selection of one or more transmit parameters (e.g., Precoding Matrix Indicator (PMI) and/or rank) for the desired downlink transmissions to the wireless device 14.

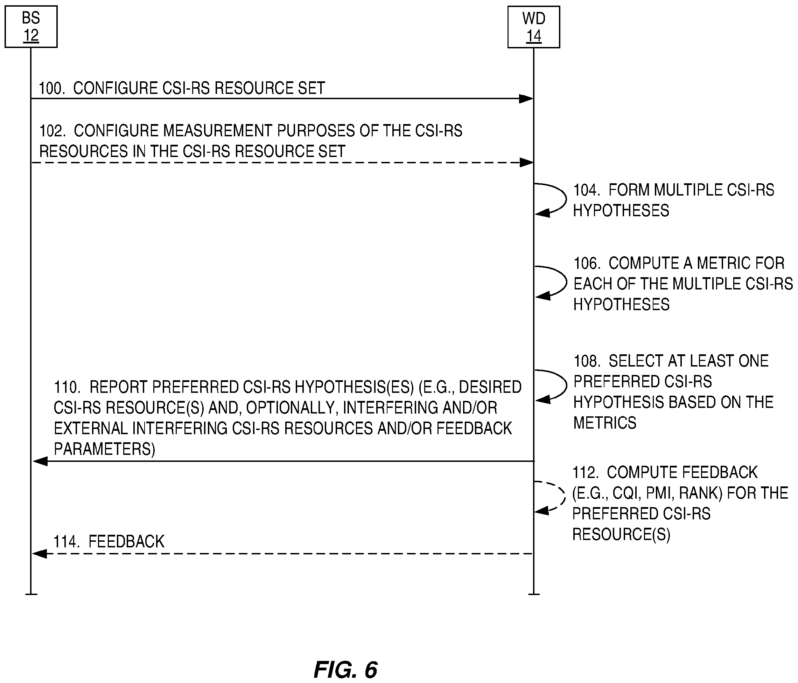

More specifically, Figure 6 illustrates the operation of the base station 12 and the wireless device 14 according to some embodiments of the present disclosure. As illustrated, the base station 12 configures a set of CSI-RS resources for the wireless device 14 (step 100). The set of CSI-RS resources includes multiple CSI-RS resources. A CSI-RS resource is the measurement resource comprising a set of CSI-RS associated with one beam or source of interference as seen by the wireless device. The set of CSI-RS resources configured for the wireless device 14 are CSI-RS resources available for the wireless device 14 to use for measurements as dynamically configured by the base station 12. The act of configuring the set of CSI-RS resources is, in some embodiments, aperiodic. For example, the set of CSI-RS resources may be configured by Radio-Resource Control (RRC) signaling or other type of higher-layer signaling. However, the configuration of the set of CSI-RS resources may be sent using any suitable techniques or message(s).

In some embodiments, the base station 12 configures the set of CSI-RS resources to the wireless device 14 by signaling or otherwise communicating the actual CSI-RS resources forming the set of CSI-RS resources to the wireless device 14. However, in other embodiments, a table of CSI-RS resources is predefined or preconfigured, and the base station 12 configures the set of CSI-RS resources for the wireless device 14 by signaling or otherwise communicating an index or indices of the set of CSI-RS resources to the wireless device 14.

In some embodiments, the base station 12 configures a measurement purpose for some or, in some embodiments, all of the CSI-RS resources in the set of CSI-RS resources configured for the wireless device 14 (step 102). There are preferably two or more measurement purposes such that different subsets of the CSI-RS resources in the configured set of CSI-RS resources are configured for the different measurement purposes. The different subsets of the CSI-RS resources configured for the two or more measurement purposes are disjoint subsets (i.e., one CSI-RS resource has only one measurement purpose). For example, if there are two measurement purposes, then there is a first subset of the CSI-RS resources in the set of CSI-RS resources configured for the wireless device 14 that are configured with the first measurement purpose and a different, disjoint subset configured with the second measurement purpose.

In some embodiments, there are three possible measurement purposes, namely, a desired CSI-RS measurement purpose, an interfering CSI-RS measurement purpose, and an external CSI-RS measurement purpose. A CSI-RS resource configured with the desired CSI-RS measurement purpose is a CSI-RS resource for measurement on a candidate channel (e.g., beam) for the wireless device's 14 own (desired) downlink transmission(s). A CSI-RS resource configured with the interfering CSI-RS measurement purpose is a CSI-RS resource for measurement on a channel(s) (e.g., beam(s)) for other (interfering) transmissions within the same cell using, e.g., orthogonal Demodulation Reference Signals (DMRSs). Lastly, a CSI-RS resource configured with the external interfering CSI-RS measurement purpose is a CSI-RS resource for external interference measurement on CSI-IM, or a CSI-RS resource to be discarded for CSI hypothesis calculations.

The wireless device 14 then forms multiple CSI-RS hypotheses from the set of CSI-RS resources (step 104). In some embodiments where the measurement purposes of at least some of the CSI-RS resources in the set are configured, the wireless device 14 forms the CSI-RS hypotheses from the CSI-RS resources in the configured set according to their measurement purposes. In some embodiments, each CSI-RS hypothesis includes: one or more desired CSI-RS resources, one or more interfering CSI-RS resources (if any are configured), and/or one or more external interfering CSI-RS resources (i.e., CSI-IM) (if any are configured). Each CSI-RS hypothesis includes a different combination of CSI-RS resources from the set of CSI-RS resources configured for the wireless device 14. Each of these resources is selected from the set of CSI-RS resources configured for the wireless device 14 according to their measurement purposes (e.g., a CSI-RS resource(s) in the set having a measurement purpose of a desired CSI-RS measurement can be included in a CSI-RS hypothesis as a CSI-RS resource for a candidate desired channel (e.g., beam) and a CSI-RS resource(s) in the set having a measurement purpose of an external interference measurement can be included in a hypothesis as a CSI-RS resource for external interference measurement). In addition, each hypothesis may further include or define one or more feedback parameters, or metrics, that are to be computed for the hypothesis. The one or more feedback parameters may include, for example, CQI per code word, PMI, and/or transmission rank.

The wireless device 14 then computes a metric for each of the CSI-RS hypotheses (step 106). While any suitable metric may be used, in some embodiments, the metric computed for each CSI-RS hypothesis is expected throughput computed by summing the transport block sizes (of the selected code words) that can be received with a target block-error rate for that CSI-RS hypothesis. The wireless device 14 then selects at least one preferred, or desired, CSI-RS hypothesis based on the computed metrics (step 108) and reports the selected CSI-RS hypothesis(es) to the base station 12 (step 110). In some embodiments, the selected, or preferred, CSI-RS hypothesis(es) is(are) the CSI-RS hypothesis(es) having the best metric(s) (e.g., the highest expected throughput(s) from among the multiple CSI-RS hypotheses).

In some embodiments, the wireless device 14 computes feedback for the preferred CSI-RS hypothesis(es) (step 112). The feedback is more particularly values for one or more feedback parameters. The feedback parameters may include, for example, CQI, PMI, and/or transmission rank. Notably, in some embodiments, the metrics computed in step 106 may be based on some or all of the feedback parameters, in which case step 112 may be performed prior to or as part of step 106. The feedback is then reported to the base station 12 (step 114). Notably, in Figure 6, dashed lines are used to illustrate optional features. Further, while the steps are illustrated as being performed in a particular order, the steps may be performed in any desired order unless some specific order is explicitly or implicitly required.

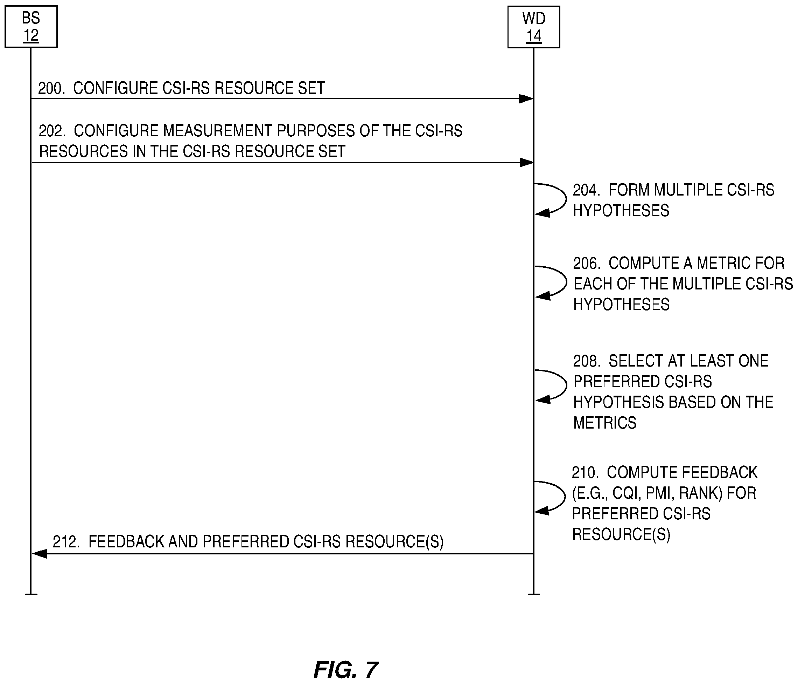

Figure 7 illustrates the operation of the base station 12 and the wireless device 14 according to other embodiments of the present disclosure. The process illustrated in Figure 7 is similar to that of Figure 6. First, steps 200, 202, 204, 206, 208, and 210, correspond to steps 100, 102, 104, 106, 108, and 112 of Figure 6. As such, the details of these steps are not repeated. In this embodiment, rather than reporting the preferred CSI-RS hypothesis(es) and the feedback separately, at least the desired CSI-RS resource(s) from the preferred CSI-RS hypothesis(es) and the feedback are reported in the same uplink message(s) (e.g., the same uplink control message(s)) (step 212). Notably, while not illustrated, some or all of the remaining information in the desired CSI-RS hypothesis(es) (e.g., interfering CSI-RS resource(s) and/or external interfering CSI-RS resource(s)) may also be reported to the base station 12 in the same uplink message(s).

The discussion will now turn to some particular embodiments of the present disclosure followed by a non-limiting example. For this discussion, the base station 12 is sometimes referred to as an eNB, and the wireless device 14 is sometimes referred to as a UE. In some particular embodiments, the network (e.g., the eNB) configures a set of CSI-RS resources for the UE. CSI-RSs transmitted using the CSI-RS resources in the set may be beamformed differently so that each CSI-RS resource is associated with a transmitted beam. If dual-polarized antennas are used at the eNB, each beam or resource may then contain two CSI-RS antenna ports, one per polarization. Hence, in the following discussion, it is assumed that each CSI-RS resource is a two antenna port CSI-RS pattern.

The network (e.g., eNB) signals to the UE information on which CSI-RS resources the UE is to assume are reflecting the "desired" channel(s), in the sense that these are channels for which the UE may receive data with good channel quality. The signaling of the desired CSI-RS resource is carried over the physical layer (layer 1), i.e., in a Downlink Control Information (DCI) message to the UE. Alternatively, this is configured using higher-layer signal (e.g., RRC-signaling). The signaling may also be performed by an index included in the DCI referring to a previously RRC-configured table of CSI-RS resources.

The CSI-RS periodicity can be configured in RRC-signaling or the CSI-RS can be aperiodic. In the latter case, the eNB can dynamically schedule the transmission of the CSI-RS resources with the DCI message when the CSI measurement is needed. The overhead due to periodic CSI-RS transmissions can then be reduced. In particular, when CSI-RS is periodic, the actual CSI-RS overhead can become an issue when measurements are not made on every transmission of CSI-RS. Dynamically scheduling the transmission of the CSI-RS resources with the DCI message when the CSI measurement is needed can therefore reduce overhead.

Note that the eNB may have obtained rough information about which beams are likely to be beams with good channel quality to the particular UE by uplink beam received power measurements, or by feedback from the UE of received power from beam-specific reference signals or received power by LTE Release 12 Discovery Reference Signals (DRSs). Such measurement feedback has large latency as it is carried over higher-layer (Medium-Access Control (MAC) layer) signaling.

The network may also signal a CSI-IM resource in the DCI message. The UE then performs measurements of received power in this CSI-IM resource. If the serving node (i.e., the eNB) is assigned a Zero-Power (ZP) CSI-RS in this CSI-IM resource, then the UE will measure external interference (i.e., interference from other cells which are not assigned a ZP CSI-RS for these resource elements). The UE treats the measurement in the signaled CSI-IM resource as interference when computing the CQI. If multiple CSI-IMs are indicated, then the UE takes all of them into account in the CQI estimation.

Furthermore, the network may also signal an interfering CSI-RS resource in the DCI message. The UE then measures the channel based on these interfering CSI-RS resources and treats these as co-scheduled interfering transmissions. Hence, these resources reflect the MU-MIMO transmission. By measuring these, the UE may then accurately estimate the impact of a co-scheduled user (which may be transmitted in another beam, i.e., the interfering CSI-RS is then beamformed/precoded in another direction).

Based on the desired CSI-RS, the interfering CSI-RS (if indicated in the message), and the CSI-IM (if indicated in the message), the UE then forms multiple CSI feedback hypotheses. Note that this is different from Transmission Mode 10 (TM10) in LTE, where the UE is signaled a single desired CSI-RS and a single CSI-IM and then computes the CQI, PMI, and transmission rank based on this single hypothesis. In the present disclosure, the UE forms multiple CSI hypotheses based on the signaled information.

The UE forms multiple CSI hypotheses based on different combinations of multiple measurement resources. A measurement resource may be a CSI-RS or a CSI-IM resource. A CSI hypothesis may contain one or more of the following input parameters: one or more desired CSI-RS resources, one or more interfering CSI-RS resources, and one or more external interference resources (CSI-IM). The CSI hypothesis may also contain one or more of the following output parameters: the transmission rank, the CQI per code word, and PMI. It should be noted that, in some embodiments, PMI and rank are input parameters for the metric computation, but the CQI is a result based on the metric. If the CSI hypothesis is viewed as only the set of measurement resources, sub-hypotheses are formed reflecting the different rank and PMI choices. The sub-hypothesis (rank and PMI) that maximizes the metric of the CSI hypothesis will then be the result.

For each CSI hypothesis the UE computes a metric. For instance, the metric may be the expected throughput by summing the transport block sizes (of the selected code words) that can be received with a target block-error rate. A selection mechanism in the UE then selects at least one preferred CSI hypothesis from the set of computed CSI hypotheses. The UE feeds back the one or more selected, or preferred, hypotheses to the eNB in either a combined or in a multiple of uplink control message(s). For each selected, or preferred, hypothesis, at least the assumptions on the desired CSI-RS resource of that selected hypothesis are also signaled in the uplink control channel.

Example: As one non-limiting example, the UE is configured by RRC-signaling with eight CSI-RS resources, where each resource has two CSI-RS antenna ports. The CSI measurement purpose part in a DCI message that schedules an uplink transmission contains a 16-bit bitmap, grouped in eight sets of two bits each. Each two-bit set is associated with one of the RRC-configured CSI-RS resources. The bitmap then defines the CSI measurement purpose for each CSI-RS resource as:
- If the bit set is "00," then the UE shall treat the associated CSI-RS as candidate channels for its own (desired) transmission,
- If the bit set is "01," then the UE shall treat the associated CSI-RS as channels for other (interfering) transmissions using orthogonal DMRSs,
- If the bit set is "10," then the UE shall use the CSI-RS as a resource to measure external interference on as CSI-IM, and
- If the bit set is "11," then the UE shall discard the associated CSI-RS in the following CSI hypothesis calculations.

Assume that indicated measurement purposes for the CSI-RS resources configured for the UE consist of two desired CSI-RS, one interfering CSI-RS, and one CSI-IM resource. The UE then computes three CSI hypotheses, using the first, the second, and both desired CSI-RS resources. For each hypothesis, the UE computes the desired rank and CQI per code word and potentially also PMI, and a selection metric. The CQI is computed taking into account the interfering CSI-RS resource and the CSI-IM measurement. The UE then compares the selection metrics computed for the CSI hypotheses and selects the largest one(s). In one embodiment, the UE can select and report multiple hypotheses based on the metrics, e.g., the two with highest metrics. The CQI, PMI, rank, and the selected desired CSI-RS resource(s) are indicated in the uplink CSI feedback message that was scheduled.

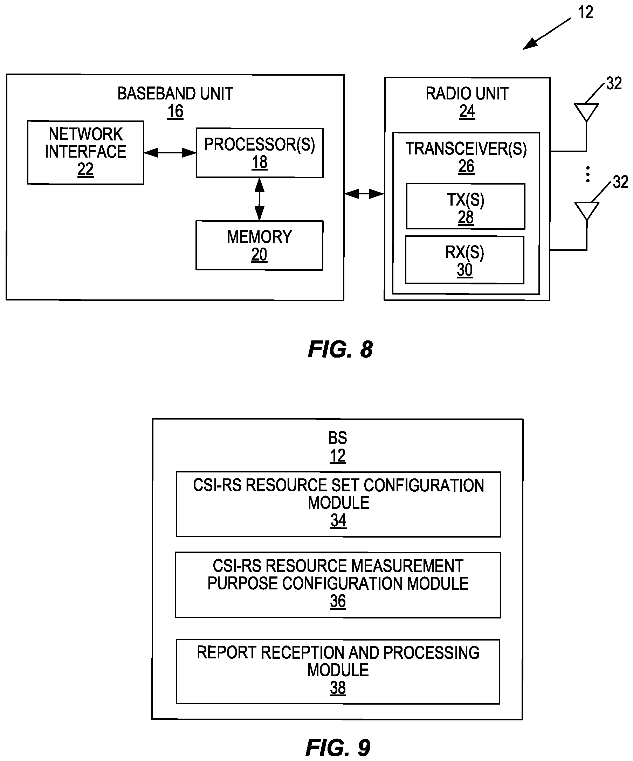

Figure 8 is a block diagram of the base station 12 (e.g., eNB) according to some embodiments of the present disclosure. As illustrated, the base station 12 includes a baseband unit 16 including at least one processor 18 (e.g., a Central Processing Unit (CPU), an Application-Specific Integrated Circuit (ASIC), a Field-Programmable Gate Array (FPGA), etc.), memory 20, and a network interface 22 as well as a radio unit 24 including at least one wireless, or Radio Frequency (RF), transceiver 26 that includes at least one transmitter 28 and at least one receiver 30 coupled to one or more antennas 32. In some embodiments, the functionality of the base station 12 described herein is implemented in software that is stored in the memory 20 and executed by the at least one processor 18, whereby the base station 12 operates to, e.g., configure the set of CSI-RS resources for the wireless device 14, configure the measurement purposes of at least some and possibly all of the CSI-RS resources in the configured set, etc.

In some embodiments, a computer program is provided, where the computer program comprises instructions which, when executed on at least one processor (e.g., the at least one processor 18), cause the at least one processor to carry out the functionality of the base station 12 according to any of the embodiments described herein. In some embodiments, a carrier containing the computer program is provided, wherein the carrier is one of an electronic signal, an optical signal, a radio signal, or a computer-readable storage medium (e.g., a non-transitory computer-readable medium).

Figure 9 illustrates the base station 12 according to another embodiment of the present disclosure. As illustrated, the base station 12 includes a CSI-RS resource set configuration module 34, a CSI-RS resource measurement purpose configuration module 36 (only in some embodiments), and a report reception and processing module 38, each of which is implemented in software. The CSI-RS resource set configuration module 34 operates to configure the set of CSI-RS resources for the wireless device 14 by, e.g., transmitting an appropriate message(s) or signal(s) via an associated transmitter of the base station 12 (e.g., the at least one transmitter 28). In some embodiments where the base station 12 includes the CSI-RS resource measurement purpose configuration module 36, the CSI-RS resource measurement purpose configuration module 36 operates to configure the measurement purpose of each (and preferably all) of the CSI-RS resources in the configured set for the wireless device 14 by, e.g., transmitting an appropriate message(s) or signal(s) via an associated transmitter of the base station 12. The report reception and processing module 38 operates to receive (via an associated receiver of the base station 12) the report from the wireless device 14 for the at least one CSI-RS hypothesis selected by the wireless device 14, as described above. The report reception and processing module 38 may then process the report in any suitable manner.

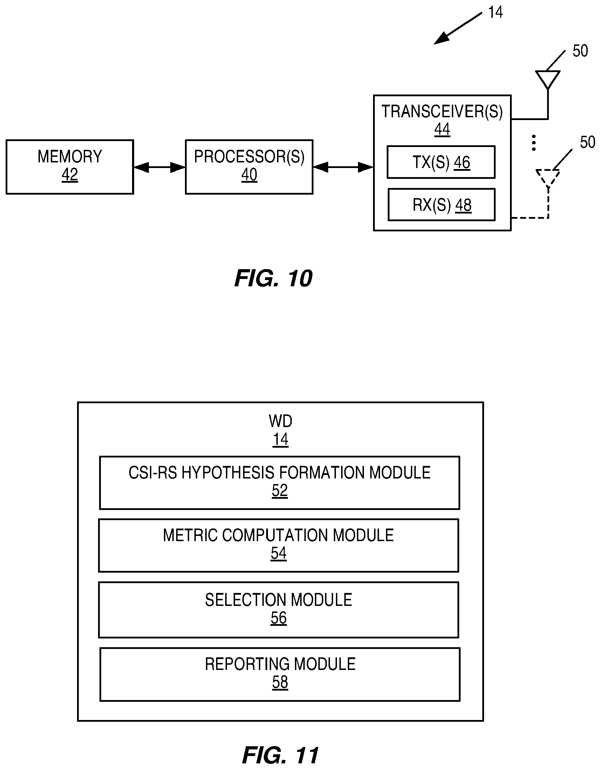

Figure 10 is a block diagram of the wireless device 14 according to some embodiments of the present disclosure. As illustrated, the wireless device 14 includes at least one processor 40, memory 42, and a wireless, or RF, transceiver 44 that includes at least one transmitter 46 and at least one receiver 48 coupled to one or more antennas 50. In some embodiments, the functionality of the wireless device 14 described herein is implemented in software that is stored in the memory 42 and executed by the at least one processor 40.

In some embodiments, a computer program is provided, where the computer program comprises instructions which, when executed on at least one processor (e.g., the at least one processor 40), cause the at least one processor to carry out the functionality of the wireless device 14 according to any of the embodiments described herein. In some embodiments, a carrier containing the computer program is provided, wherein the carrier is one of an electronic signal, an optical signal, a radio signal, or a computer-readable storage medium (e.g., a non-transitory computer-readable medium).

Figure 11 illustrates the wireless device 14 according to some other embodiments of the present disclosure. As illustrated, the wireless device 14 includes a CSI-RS hypothesis formation module 52, a metric computation module 54, a selection module 56, and a reporting module 58, each of which is implemented in software. The CSI-RS hypothesis formation module 52 operates to form multiple CSI-RS hypotheses from the configured set of CSI-RS resources configured for the wireless device 14 and, in some embodiments, the configured measurement purposes of those CSI-RS resources. The metric computation module 54 then computes a metric for each hypothesis, as described above. The selection module 56 selects at least one of the CSI-RS hypotheses based on the computed metrics. The reporting module 58 then reports the selected CSI-RS hypothesis(es) to the network (e.g., to the base station 12) by transmitting appropriate message(s) or signal(s) to the base station 12 via an associated transmitter of the wireless device 14.

Embodiments of systems and methods for flexible CSI-RS configuration and CSI feedback are disclosed. In some embodiments, a network node (e.g., a radio-access node such as, but not limited to, a base station) configures a set of CSI-RS resources for a wireless device (e.g., a UE). In response, the base station receives, from the wireless device, a report indicating one or more preferred or selected CSI hypotheses formed from the set of CSI-RS resources.

In some embodiments, the network node also configures measurement purposes for at least some, and in some embodiments all, of the CSI-RS resources in the set of CSI-RS resources configured for the wireless device. In some embodiments, the CSI-RS hypotheses are formed from the set of CSI-RS resources configured for the wireless device according to the measurement purposes configured for the CSI-RS resources in the set. In some embodiments, the set of CSI-RS resources is configured statically or semi-statically (e.g., via higher-layer signaling such as RRC-signaling), and the measurement purposes of the CSI-RS resources in the set are configured dynamically (e.g., via a DCI message). In some embodiments, both CSI-RS resources and purpose of the CSI-RS resources in the set are configured dynamically (e.g., via the same DCI message) and, as a result, the CSI-RS may be transmitted aperiodically. In some embodiments, the CSI-RS resources are configured aperiodically or periodically (semi-statically).

In some embodiments, the measurement purpose of each of at least some of the CSI-RS resources in the set of CSI-RS resources configured for the wireless device is one of a group consisting of: a desired CSI-RS, an interfering CSI-RS, or an external interference CSI-IM.

In some embodiments, each of the CSI-RS hypotheses includes one or more desired CSI-RS resources, one or more interfering CSI-RS resources, and/or one or more external interfering resources (CSI-IM). In addition, in some embodiments, each CSI-RS hypothesis further includes one or more output parameters (i.e., parameters corresponding to the output resulting from evaluation of the CSI-RS hypothesis), e.g., a transmission rank, a CQI per code word, and/or a PMI.

In some embodiments, a wireless device (e.g., a UE) operates to form multiple CSI-RS hypotheses from a set of CSI-RS resources configured for the wireless device. The wireless device computes a metric for each CSI-RS hypothesis and selects at least one of the CSI-RS hypotheses based on the computed metrics. The wireless device then reports the selected CSI-RS hypothesis(es) to the network (e.g., to a base station serving the wireless device).

In some embodiments, the wireless device forms the CSI-RS hypotheses from the set of CSI-RS resources configured for the wireless device according to measurement purposes configured for at least some of the CSI-RS resources in the set. In some embodiments, the set of CSI-RS resources is configured statically or semi-statically (e.g., via higher-layer signaling such as RRC-signaling), and the measurement purposes of the CSI-RS resources in the set are configured dynamically (e.g., via a DCI message). In some embodiments, both CSI-RS resources and purpose of the CSI-RS resources in the set are configured dynamically (e.g., via the same DCI message).

In some embodiments, the measurement purpose of each of at least some of the CSI-RS resources in the set of CSI-RS resources configured for the wireless device is one of a group consisting of: a desired CSI-RS, an interfering CSI-RS, or an external interference CSI-IM.

In some embodiments, each of the CSI-RS hypotheses includes one or more desired CSI-RS resources, one or more interfering CSI-RS resources, and/or one or more external interfering resources (CSI-IM). In addition, in some embodiments, each CSI-RS hypothesis further includes one or more output parameters, e.g., a transmission rank, a CQI per code word, and/or a PMI.

In some embodiments, a UE (or more generally, a wireless device) forms multiple CSI hypotheses based on different combinations of multiple measurement resources. Each measurement resource may be a CSI-RS or a CSI-IM resource. Each CSI hypothesis may contain one or more of the following input parameters:
- one or more desired CSI-RS resources,
- one or more interfering CSI-RS resources, and
- one or more external interference resources (CSI-IM).
In addition, each CSI hypothesis may contain one or more output parameters that indicate results from evaluation of the CSI-hypothesis (i.e., one or more parameters that will be determined based on the input parameters of the CSI hypothesis). The output parameters may include one or more of the following:
- the transmission rank,
- the CQI per code word, and
- PMI.
The measurement resources to be used in forming the CSI hypotheses in the UE are signaled, e.g., in a message, from the eNB (or more generally, the base station or the radio-access node) to the UE. This signaling may be, for example, either a physical-layer DCI message or higher-layer RRC-signaling. For each CSI hypothesis, the UE computes a metric. In some embodiments, the metric is expected throughput summed over all layers (selected code words). A selection mechanism in the UE selects at least one preferred CSI hypothesis from the set of computed CSI hypotheses based on the computed metrics for the CSI hypotheses. The UE feeds back the one or more selected hypotheses to the eNB, e.g., in an uplink control message.

While not being limited to or by any particular benefit or advantage, the CSI feedback framework disclosed herein has large benefits over the LTE CSI framework when operating in an environment where CSI-RSs need to be reconfigured often as is the case of many small cells or narrow beams and medium-to-high UE mobility.

The following acronyms are used throughout this disclosure.
- µs Microsecond
- 2D Two-Dimensional
- 3GPP 3^{rd} Generation Partnership Project
- AP Antenna Port
- ARQ Automatic Repeat Request
- ASIC Application-Specific Integrated Circuit
- CDM Code-Division Multiplexing
- CFI Control Format Indicator
- CoMP Coordinated Multipoint
- CPU Central Processing Unit
- CQI Channel Quality Information
- CRS Cell-Specific Reference Symbol
- CSI Channel State Information
- CSI-RS Channel State Information Reference Signal
- DCI Downlink Control Information
- DFT Discrete Fourier Transform
- DL Downlink
- DMRS Demodulation Reference Signal
- DRS Discovery Reference Signal
- eNB Enhanced or Evolved Node B
- EPDCCH Enhanced Physical Downlink Control Channel
- FPGA Field-Programmable Gate Array
- GSM Global System for Mobile Communications
- ID Identifier
- IM Interference Measurement
- LTE Long-Term Evolution
- MAC Medium-Access Control
- ms Millisecond
- MU-MIMO Multiuser Multiple-Input Multiple-Output
- NZP Non-Zero-Power
- PDCCH Physical Downlink Control Channel
- PDSCH Physical Downlink Shared Channel
- PMI Precoding Matrix Indicator
- PRB Physical Resource Block
- PUCCH Physical Uplink Control Channel
- PUSCH Physical Uplink Shared Channel
- OFDM Orthogonal Frequency-Division Multiplexing
- QPSK Quadrature Phase-Shift Keying
- RB Resource Block
- RE Resource Element
- RF Radio Frequency
- RI Rank Indicator
- RPSF Requests Per Service Flow
- RRC Radio-Resource Control
- SF Subframe
- TM9 Transmission Mode 9
- TM10 Transmission Mode 10
- TP Transmission Point
- TS Technical Specification
- UE User Equipment
- UL Uplink
- UMB Ultra-Mobile Broadband
- WCDMA Wideband Code-Division Multiple Access
- ZP Zero-Power

Those skilled in the art will recognize improvements and modifications to the embodiments of the present disclosure. All such improvements and modifications are considered within the scope of the concepts disclosed herein and the claims that follow.

## Claims

1. A method of operation of a network node (12) in a cellular communications network (10) to configure Channel State Information Reference Signal, CSI-RS, resources for a wireless device (14), comprising:
configuring a set of CSI-RS resources for the wireless device (14); and
dynamically configuring, for the wireless device (14), measurement purposes for a plurality of CSI-RS resources comprised in the set of CSI-RS resources configured for the wireless device (14), wherein the method is
**characterized in that**
for each CSI-RS resource in the plurality of CSI-RS resources, the measurement purpose of the CSI-RS resource is one of a group consisting of: a desired CSI-RS resource measurement purpose, an interfering CSI-RS resource measurement purpose, and an external interfering CSI-RS resource measurement purpose, and by further comprising:
receiving a report of one or more preferred CSI-RS hypotheses selected by the wireless device (14) from the set of CSI-RS resources according to the measurement purposes for the plurality of CSI-RS resources comprised in the set of CSI-RS resources configured for the wireless device (14).

2. The method of claim 1 wherein the measurement purposes configured for the plurality of CSI-RS resources comprise at least two different measurement purposes such that a different subset of the plurality of CSI-RS resources is configured with each of the at least two different measurement purposes, the different subsets of the plurality of CSI-RS resources configured for the at least two different measurement purposes being disjoint subsets.

3. The method of claim 1 or 2 wherein the one or more preferred CSI-RS hypotheses are selected by the wireless device (14) from a plurality of CSI-RS hypotheses formed from the set of CSI-RS resources configured for the wireless device (14) based on the measurement purposes configured for the plurality of CSI-RS resources comprised in the set of CSI-RS resources.

4. The method according to any one of claims 1 - 3 further comprising receiving values for one or more feedback metrics for the wireless device (14) for the one or more preferred CSI-RS hypotheses.

5. A network node (12) in a cellular communications network (10) operative to configure Channel State Information Reference Signal, CSI-RS, resources for a wireless device (14), whereby the network node (12) is configured to:
configure a set of CSI-RS resources for the wireless device (14); and
dynamically configure, for the wireless device (14), measurement purposes for a plurality of CSI-RS resources comprised in the set of CSI-RS resources configured for the wireless device (14), wherein the network node (12) is **characterized in that**
for each CSI-RS resource in the plurality of CSI-RS resources, the measurement purpose of the CSI-RS resource is one of a group consisting of: a desired CSI-RS resource measurement purpose, an interfering CSI-RS resource measurement purpose, and an external interfering CSI-RS resource measurement purpose, and by
being further configured to receive a report of one or more preferred CSI-RS hypotheses selected by the wireless device (14) from the set of CSI-RS resources according to the measurement purposes for the plurality of CSI-RS resources comprised in the set of CSI-RS resources configured for the wireless device (14).

6. The network node (12) of claim 5 wherein the measurement purposes configured for the plurality of CSI-RS resources comprise at least two different measurement purposes such that a different subset of the plurality of CSI-RS resources is configured with each of the at least two different measurement purposes, the different subsets of the plurality of CSI-RS resources configured for the at least two different measurement purposes being disjoint subsets.

7. The network node (12) of claim 5 or 6 wherein the one or more preferred CSI-RS hypotheses are selected by the wireless device (14) from a plurality of CSI-RS hypotheses formed from the set of CSI-RS resources configured for the wireless device (14) based on the measurement purposes configured for the plurality of CSI-RS resources comprised in the set of CSI-RS resources.

8. A method of operation of a wireless device (14) in a cellular communications network (10), comprising:
receiving, from the cellular communications network (10), a configuration of a set of Channel State Information Reference Signal, CSI-RS, resources configured for the wireless device (14); and
receiving, from the cellular communications network (10), a dynamic configuration of measurement purposes configured for a plurality of CSI-RS resources comprised in the set of CSI-RS resources, wherein the method is **characterized in that**
the at least two different measurement purposes configured for the plurality of CSI-RS resources comprise at least two of a group consisting of: a desired CSI-RS resource measurement purpose, an interfering CSI-RS resource measurement purpose, and an external interfering CSI-RS resource measurement purpose, and by further comprising:
reporting the one or more preferred CSI-RS hypotheses selected by the wireless device from the set of CSI-RS resources according to the measurement purposes for the plurality of CSI-RS resources comprised in the set of CSI-RS resources configured for the wireless device to the cellular communications network (10).

9. The method of claim 8 further comprising:
forming a plurality of CSI-RS hypotheses from the set of CSI-RS resources based on the measurement purposes configured for the plurality of CSI-RS resources comprised in the set of CSI-RS resources;
computing a metric for each of the plurality of CSI-RS hypotheses; and
selecting one or more preferred CSI-RS hypotheses from the plurality of CSI-RS hypotheses based on the metrics computed for the plurality of CSI-RS hypotheses.

10. The method of any one of claims 8 - 9 wherein the metric computed for each of the plurality of CSI-RS hypotheses is expected throughput summed over all transmission layers for a downlink to the wireless device (14) such that computing the metric for each of the plurality of CSI-RS hypotheses comprises computing, for each CSI-RS hypothesis of the plurality of CSI-RS hypotheses, the expected throughput summed over all transmission layers for the downlink to the wireless device (14) according to the CSI-RS hypothesis.

11. The method of claim 10 wherein selecting the one or more preferred CSI-RS hypotheses comprises selecting one or more of the plurality of CSI-RS hypotheses having the highest expected throughput as the one or more preferred CSI-RS hypotheses.

12. The method according to any one of claims 8 - 11 further comprising:
computing values for one or more feedback metrics for the wireless device (14) for each of the one or more preferred CSI-RS hypotheses; and
reporting the values computed for the one or more feedback metrics for the wireless device (14) for each of the one or more preferred CSI-RS hypotheses to the cellular communications network (10).

13. A wireless device (14) for operation in a cellular communications network (10), whereby the wireless device (14) is configured to:
receive, from the cellular communications network (10) via the at least one transceiver (44), an indication of a set of Channel State Information Reference Signal, CSI-RS, resources configured for the wireless device (14); and
receive, from the cellular communications network (10) via the at least one transceiver (44), an indication of measurement purposes configured for a plurality of CSI-RS resources comprised in the set of CSI-RS resources, wherein the wireless device (14) is **characterized in that.**
the at least two different measurement purposes configured for the plurality of CSI-RS resources comprise at least two of a group consisting of: a desired CSI-RS resource measurement purpose, an interfering CSI-RS resource measurement purpose, and an external interfering CSI-RS resource measurement purpose, and by being further configured to report the one or more preferred CSI-RS hypotheses selected by the wireless device from the set of CSI-RS resources according to the measurement purposes for the plurality of CSI-RS resources comprised in the set of CSI-RS resources configured for the wireless device to the cellular communications network (10).

14. The wireless device (14) of claim 13 wherein, via execution of the software by the at least one processor (40), the wireless device (14) is further configured to:
form a plurality of CSI-RS hypotheses from the set of CSI-RS resources based on the measurement purposes configured for the plurality of CSI-RS resources comprised in the set of CSI-RS resources;
compute a metric for each of the plurality of CSI-RS hypotheses; and
select one or more preferred CSI-RS hypotheses from the plurality of CSI-RS hypotheses based on the metrics computed for the plurality of CSI-RS hypotheses.

15. The wireless device (14) of any one of claims 13 - 14 wherein the metric computed for each of the plurality of CSI-RS hypotheses is expected throughput summed over all transmission layers for a downlink to the wireless device (14).

16. The wireless device (14) of claim 15 wherein the one or more preferred CSI-RS hypotheses are one or more of the plurality of CSI-RS hypotheses having the highest expected throughput.

17. The wireless device (14) according to any one of claims 14 - 16 wherein the wireless device (14) is further configured to:
compute values for one or more feedback metrics for the wireless device (14) for each of the one or more preferred CSI-RS hypotheses; and
report the values computed for the one or more feedback metrics for the wireless device (14) for each of the one or more preferred CSI-RS hypotheses to the cellular communications network (10).

## Patentansprüche

1. Betriebsverfahren eines Netzwerkknotens (12) in einem zellularen Kommunikationsnetzwerk (10) zum Auslegen von Kanalzustandsinformationsreferenzsignal(CSI-RS)-Ressourcen für eine drahtlose Vorrichtung (14), das Folgendes umfasst:
Auslegen eines Satzes von CSI-RS-Ressourcen für eine drahtlose Vorrichtung (14) und
dynamisches Auslegen für die drahtlose Vorrichtung (14) von Messzwecken für eine Vielzahl von CSI-RS-Ressourcen, die im Satz von für die drahtlose Vorrichtung (14) ausgelegten CSI-RS-Ressourcen enthalten sind, wobei das Verfahren
**dadurch gekennzeichnet ist, dass**
für jede CSI-RS-Ressource in der Vielzahl von CSI-RS-Ressourcen der Messzweck der CSI-RS-Ressource einer von einer Gruppe ist, die aus Folgendem besteht: einem gewünschten CSI-RS-Ressourcenmesszweck, einem störenden CSI-RS-Ressourcenmesszweck und einem externen störenden CSI-RS-Ressourcenmesszweck, und dadurch, dass es ferner Folgendes umfasst:
Empfangen eines Berichts von einer oder mehreren bevorzugten CSI-RS-Hypothesen, die von der drahtlosen Vorrichtung (14) aus dem Satz von CSI-RS-Ressourcen gemäß den Messzwecken für die Vielzahl von CSI-RS-Ressourcen, die im Satz von für die drahtlose Vorrichtung (14) ausgelegten CSI-RS-Ressourcen enthalten sind, ausgewählt sind.

2. Verfahren aus Anspruch 1, wobei die für die Vielzahl von CSI-RS-Ressourcen ausgelegten Messzwecke mindestens zwei verschiedene Messzwecke umfassen, derart, dass ein verschiedener Untersatz der Vielzahl von CSI-RS-Ressourcen mit jedem der mindestens zwei verschiedenen Messzwecke ausgelegt wird, wobei die verschiedenen Untersätze der Vielzahl von CSI-RS-Ressourcen, die für die mindestens zwei verschiedenen Messzwecke ausgelegt sind, disjunkte Untersätze sind.

3. Verfahren aus Anspruch 1 oder 2, wobei die eine oder die mehreren bevorzugten CSI-RS-Hypothesen von der drahtlosen Vorrichtung (14) auf Basis der Messzwecke, die für die Vielzahl von CSI-RS-Ressourcen ausgelegt sind, die im Satz von CSI-RS-Ressourcen enthalten sind, aus einer Vielzahl von CSI-RS-Hypothesen, die aus dem für die drahtlose Vorrichtung (14) ausgelegten Satz von CSI-RS-Ressourcen gebildet sind, ausgewählt werden.

4. Verfahren nach einem der Ansprüche 1-3, das ferner das Empfangen von Werten für eine oder mehrere Rückmeldungsmetriken für die drahtlose Vorrichtung (14) für die eine oder die mehreren bevorzugten CSI-RS-Hypothesen umfasst.

5. Netzwerkknoten (12) in einem zellularen Kommunikationsnetzwerk (10), der betreibbar ist, Kanalzustandsinformationsreferenzsignal(CSI-RS)-Ressourcen für eine drahtlose Vorrichtung (14) auszulegen, wodurch der Netzwerkknoten (12) zu Folgendem ausgelegt ist:
Auslegen eines Satzes von CSI-RS-Ressourcen für eine drahtlose Vorrichtung (14) und
dynamisches Auslegen für die drahtlose Vorrichtung (14) von Messzwecken für eine Vielzahl von CSI-RS-Ressourcen, die im Satz von für die drahtlose Vorrichtung (14) ausgelegten CSI-RS-Ressourcen enthalten sind, wobei der Netzwerkknoten (12) **dadurch gekennzeichnet ist, dass**
für jede CSI-RS-Ressource in der Vielzahl von CSI-RS-Ressourcen der Messzweck der CSI-RS-Ressource einer von einer Gruppe ist, die aus Folgendem besteht: einem gewünschten CSI-RS-Ressourcenmesszweck, einem störenden CSI-RS-Ressourcenmesszweck und einem externen störenden CSI-RS-Ressourcenmesszweck, und dadurch, dass
er ferner dazu ausgelegt ist, einen Bericht von einer oder mehreren bevorzugten CSI-RS-Hypothesen, die von der drahtlosen Vorrichtung (14) aus dem Satz von CSI-RS-Ressourcen gemäß den Messzwecken für die Vielzahl von CSI-RS-Ressourcen, die im Satz von für die drahtlose Vorrichtung (14) ausgelegten CSI-RS-Ressourcen enthalten sind, ausgewählt sind, zu empfangen.

6. Netzwerkknoten (12) aus Anspruch 5, wobei die für die Vielzahl von CSI-RS-Ressourcen ausgelegten Messzwecke mindestens zwei verschiedene Messzwecke umfassen, derart, dass ein verschiedener Untersatz der Vielzahl von CSI-RS-Ressourcen mit jedem der mindestens zwei verschiedenen Messzwecke ausgelegt wird, wobei die verschiedenen Untersätze der Vielzahl von CSI-RS-Ressourcen, die für die mindestens zwei verschiedenen Messzwecke ausgelegt sind, disjunkte Untersätze sind.

7. Netzwerkknoten (12) aus Anspruch 5 oder 6, wobei die eine oder die mehreren bevorzugten CSI-RS-Hypothesen von der drahtlosen Vorrichtung (14) auf Basis der Messzwecke, die für die Vielzahl von CSI-RS-Ressourcen ausgelegt sind, die im Satz von CSI-RS-Ressourcen enthalten sind, aus einer Vielzahl von CSI-RS-Hypothesen, die aus dem für die drahtlose Vorrichtung (14) ausgelegten Satz von CSI-RS-Ressourcen gebildet sind, ausgewählt werden.

8. Betriebsverfahren einer drahtlosen Vorrichtung (14) in einem zellularen Kommunikationsnetzwerk (10), das Folgendes umfasst:
Empfangen vom zellularen Kommunikationsnetzwerk (10) einer Auslegung eines Satzes von Kanalzustandsinformationsreferenzsignal(CSI-RS)-Ressourcen, die für die drahtlose Vorrichtung (14) ausgelegt sind; und
Empfangen vom zellularen Kommunikationsnetzwerk (10) einer dynamischen Auslegung von Messzwecken, die für eine Vielzahl von CSI-RS-Ressourcen ausgelegt sind, die im Satz von CSI-RS-Ressourcen enthalten sind, wobei das Verfahren **dadurch gekennzeichnet ist, dass**
die mindestens zwei verschiedenen Messzwecke, die für die Vielzahl von CSI-RS-Ressourcen ausgelegt sind, mindestens zwei von einer Gruppe umfassen, die aus Folgendem besteht: einem gewünschten CSI-RS-Ressourcenmesszweck, einem störenden CSI-RS-Ressourcenmesszweck und einem externen störenden CSI-RS-Ressourcenmesszweck, und dadurch, dass es ferner Folgendes umfasst:
Berichten der einen oder der mehreren bevorzugten CSI-RS-Hypothesen, die von der drahtlosen Vorrichtung aus dem Satz von CSI-RS-Ressourcen gemäß den Messzwecken für die Vielzahl von CSI-RS-Ressourcen, die im Satz von für die drahtlose Vorrichtung ausgelegten CSI-RS-Ressourcen enthalten sind, ausgewählt sind, an das zellulare Kommunikationsnetzwerk (10).

9. Verfahren aus Anspruch 8, das ferner Folgendes umfasst:
Bilden einer Vielzahl von CSI-RS-Hypothesen aus dem Satz von CSI-RS-Ressourcen auf Basis der Messzwecke, die für die Vielzahl von im Satz von CSI-RS-Ressourcen enthaltenen CSI-RS-Ressourcen ausgelegt sind;
Berechnen einer Metrik für jede der Vielzahl von CSI-RS-Hypothesen und
Auswählen einer oder mehrerer bevorzugter CSI-RS-Hypothesen aus der Vielzahl von CSI-RS-Hypothesen auf Basis der Metriken, die für die Vielzahl von CSI-RS-Hypothesen berechnet wurden.

10. Verfahren aus einem der Ansprüche 8-9, wobei die Metrik, die für jede der Vielzahl von CSI-RS-Hypothesen berechnet wird, ein erwarteter Durchsatz ist, der über alle Übertragungsschichten für eine Abwärtsverbindung zur drahtlosen Vorrichtung (14) summiert ist, derart, dass das Berechnen der Metrik für jede der Vielzahl von CSI-RS-Hypothesen das Berechnen für jede CSI-RS-Hypothese der Vielzahl von CSI-RS-Hypothesen des erwarteten Durchsatzes, der über alle Übertragungsschichten für die Abwärtsverbindung zur drahtlosen Vorrichtung (14) summiert ist, gemäß der CSI-RS-Hypothese umfasst.

11. Verfahren aus Anspruch 10, wobei das Auswählen der einen oder mehreren bevorzugten CSI-RS-Hypothesen das Auswählen von einer oder mehreren der Vielzahl von CSI-RS-Hypothesen mit dem höchsten erwarteten Durchsatz als die eine oder die mehreren bevorzugten CSI-RS-Hypothesen umfasst.

12. Verfahren nach einem der Ansprüche 8-11, das ferner Folgendes umfasst:
Berechnen von Werten für eine oder mehrere Rückmeldungsmetriken für die drahtlose Vorrichtung (14) für jede der einen oder mehreren bevorzugten CSI-RS-Hypothesen und
Berichten der Werte, die für die eine oder die mehreren Rückmeldungsmetriken für die drahtlose Vorrichtung (14) für jede der einen oder mehreren bevorzugten CSI-RS-Hypothesen berechnet wurden, an das zellulare Kommunikationsnetzwerk (10).

13. Drahtlose Vorrichtung (14) für einen Betrieb in einem zellularen Kommunikationsnetzwerk (10), wodurch die drahtlose Vorrichtung (14) zu Folgendem ausgelegt ist:
Empfangen vom zellularen Kommunikationsnetzwerk (10) via den mindestens einen Sendeempfänger (44) einer Anzeige eines Satzes von Kanalzustandsinformationsreferenzsignal(CSI-RS)-Ressourcen, die für die drahtlose Vorrichtung (14) ausgelegt sind; und
Empfangen vom zellularen Kommunikationsnetzwerk (10) via den mindestens einen Sendeempfänger (44) einer Anzeige von Messzwecken, die für eine Vielzahl von CSI-RS-Ressourcen ausgelegt sind, die im Satz von CSI-RS-Ressourcen enthalten sind, wobei die drahtlose Vorrichtung (14) **dadurch gekennzeichnet ist, dass**
die mindestens zwei verschiedenen Messzwecke, die für die Vielzahl von CSI-RS-Ressourcen ausgelegt sind, mindestens zwei von einer Gruppe umfassen, die aus Folgendem besteht: einem gewünschten CSI-RS-Ressourcenmesszweck, einem störenden CSI-RS-Ressourcenmesszweck und einem externen störenden CSI-RS-Ressourcenmesszweck, und dadurch, dass sie ferner dazu ausgelegt ist, die eine oder die mehreren bevorzugten CSI-RS-Hypothesen, die von der drahtlosen Vorrichtung aus dem Satz von CSI-RS-Ressourcen gemäß den Messzwecken für die Vielzahl von CSI-RS-Ressourcen, die im Satz von für die drahtlose Vorrichtung ausgelegten CSI-RS-Ressourcen enthalten sind, ausgewählt sind, an das zellulare Kommunikationsnetzwerk (10) zu berichten.

14. Drahtlose Vorrichtung (14) aus Anspruch 13, wobei die drahtlose Vorrichtung (14) via die Ausführung der Software durch den mindestens einen Prozessor (40) ferner zu Folgendem ausgelegt ist:
Bilden einer Vielzahl von CSI-RS-Hypothesen aus dem Satz von CSI-RS-Ressourcen auf Basis der Messzwecke, die für die Vielzahl von im Satz von CSI-RS-Ressourcen enthaltenen CSI-RS-Ressourcen ausgelegt sind;
Berechnen einer Metrik für jede der Vielzahl von CSI-RS-Hypothesen und
Auswählen einer oder mehrerer bevorzugter CSI-RS-Hypothesen aus der Vielzahl von CSI-RS-Hypothesen auf Basis der Metriken, die für die Vielzahl von CSI-RS-Hypothesen berechnet wurden.

15. Drahtlose Vorrichtung (14) aus einem der Ansprüche 13-14, wobei die Metrik, die für jede der Vielzahl von CSI-RS-Hypothesen berechnet wird, ein erwarteter Durchsatz ist, der über alle Übertragungsschichten für eine Abwärtsverbindung zur drahtlosen Vorrichtung (14) summiert ist.

16. Drahtlose Vorrichtung (14) aus Anspruch 15, wobei die eine oder die mehreren bevorzugten CSI-RS-Hypothesen eine oder mehrere der Vielzahl von CSI-RS-Hypothesen mit dem höchsten erwarteten Durchsatz sind.

17. Drahtlose Vorrichtung (14) nach einem der Ansprüche 14-16, wobei die drahtlose Vorrichtung (14) ferner zu Folgendem ausgelegt ist:
Berechnen von Werten für eine oder mehrere Rückmeldungsmetriken für die drahtlose Vorrichtung (14) für jede der einen oder mehreren bevorzugten CSI-RS-Hypothesen und
Berichten der Werte, die für die eine oder die mehreren Rückmeldungsmetriken für die drahtlose Vorrichtung (14) für jede der einen oder mehreren bevorzugten CSI-RS-Hypothesen berechnet wurden, an das zellulare Kommunikationsnetzwerk (10).

## Revendications

1. Procédé de fonctionnement d'un noeud de réseau (12) au sein d'un réseau de communication cellulaire (10) en vue de configurer des ressources de signal de référence d'informations d'état de canal, CSI-RS, pour un dispositif sans fil (14), comprenant les étapes ci-dessous consistant à :
configurer un ensemble de ressources de signal CSI-RS pour le dispositif sans fil (14) ; et
configurer dynamiquement, pour le dispositif sans fil (14), des objectifs de mesure pour une pluralité de ressources de signal CSI-RS comprise dans l'ensemble de ressources de signal CSI-RS configuré pour le dispositif sans fil (14), dans lequel le procédé est **caractérisé en ce que :**
pour chaque ressource de signal CSI-RS dans la pluralité de ressources de signal CSI-RS, l'objectif de mesure de la ressource de signal CSI-RS correspond à un objectif parmi un groupe constitué par : un objectif de mesure de ressources de signal CSI-RS souhaitées, un objectif de mesure de ressources de signal CSI-RS brouilleuses, et un objectif de mesure de ressources de signal CSI-RS brouilleuses externes, et **en ce qu'**il comprend en outre l'étape ci-dessous consistant à :
recevoir un rapport d'une ou plusieurs hypothèses de signal CSI-RS préférées sélectionnées par le dispositif sans fil (14) parmi l'ensemble de ressources de signal CSI-RS selon les objectifs de mesure pour la pluralité de ressources de signal CSI-RS comprise dans l'ensemble de ressources de signal CSI-RS configuré pour le dispositif sans fil (14).

2. Procédé selon la revendication 1, dans lequel les objectifs de mesure configurés pour la pluralité de ressources de signal CSI-RS comprennent au moins deux objectifs de mesure distincts, de sorte qu'un sous-ensemble distinct de la pluralité de ressources de signal CSI-RS est configuré avec chacun desdits au moins deux objectifs de mesure distincts, dans lequel les sous-ensembles distincts de la pluralité de ressources de signal CSI-RS configurés pour lesdits au moins deux objectifs de mesure distincts correspondent à des sous-ensembles disjoints.

3. Procédé selon la revendication 1 ou 2, dans lequel ladite une ou lesdites plusieurs hypothèses de signal CSI-RS préférées sont sélectionnées par le dispositif sans fil (14) parmi une pluralité d'hypothèses de signal CSI-RS formée à partir de l'ensemble de ressources de signal CSI-RS configuré pour le dispositif sans fil (14), sur la base des objectifs de mesure configurés pour la pluralité de ressources de signal CSI-RS comprise dans l'ensemble de ressources de signal CSI-RS.

4. Procédé selon l'une quelconque des revendications 1 à 3, comprenant en outre l'étape consistant à recevoir des valeurs pour une ou plusieurs métriques de rétroaction du dispositif sans fil (14), pour ladite une ou lesdites plusieurs hypothèses de signal CSI-RS préférées.

5. Noeud de réseau (12) au sein d'un réseau de communication cellulaire (10) exploitable de manière à configurer des ressources de signal de référence d'informations d'état de canal, CSI-RS, pour un dispositif sans fil (14), moyennant quoi le noeud de réseau (12) est configuré de manière à :
configurer un ensemble de ressources de signal CSI-RS pour le dispositif sans fil (14) ; et
configurer dynamiquement, pour le dispositif sans fil (14), des objectifs de mesure pour une pluralité de ressources de signal CSI-RS comprise dans l'ensemble de ressources de signal CSI-RS configuré pour le dispositif sans fil (14), dans lequel le noeud de réseau (12) est **caractérisé en ce que**
pour chaque ressource de signal CSI-RS dans la pluralité de ressources de signal CSI-RS, l'objectif de mesure de la ressource de signal CSI-RS correspond à un objectif parmi un groupe constitué par : un objectif de mesure de ressources de signal CSI-RS souhaitées, un objectif de mesure de ressources de signal CSI-RS brouilleuses, et un objectif de mesure de ressources de signal CSI-RS brouilleuses externes, et **en ce que** :
il est en outre configuré de manière à recevoir un rapport d'une ou plusieurs hypothèses de signal CSI-RS préférées sélectionnées par le dispositif sans fil (14) parmi l'ensemble de ressources de signal CSI-RS, selon les objectifs de mesure pour la pluralité de ressources de signal CSI-RS comprise dans l'ensemble de ressources de signal CSI-RS configuré pour le dispositif sans fil (14).

6. Noeud de réseau (12) selon la revendication 5, dans lequel les objectifs de mesure configurés pour la pluralité de ressources de signal CSI-RS comprennent au moins deux objectifs de mesure distincts, de sorte qu'un sous-ensemble distinct de la pluralité de ressources de signal CSI-RS est configuré avec chacun desdits au moins deux objectifs de mesure distincts, dans lequel les sous-ensembles distincts de la pluralité de ressources de signal CSI-RS configurés pour lesdits au moins deux objectifs de mesure distincts correspondant à des sous-ensembles disjoints.

7. Noeud de réseau (12) selon la revendication 5 ou 6, dans lequel ladite une ou lesdites plusieurs hypothèses de signal CSI-RS préférées sont sélectionnées par le dispositif sans fil (14) parmi une pluralité d'hypothèses de signal CSI-RS formée à partir de l'ensemble de ressources de signal CSI-RS configuré pour le dispositif sans fil (14) sur la base des objectifs de mesure configurés pour la pluralité de ressources de signal CSI-RS comprise dans l'ensemble de ressources de signal CSI-RS.

8. Procédé de fonctionnement d'un dispositif sans fil (14) dans un réseau de communication cellulaire (10), comprenant les étapes ci-dessous consistant à :
recevoir, en provenance du réseau de communication cellulaire (10), une configuration d'un ensemble de ressources de signal de référence d'informations d'état de canal, CSI-RS, configuré pour le dispositif sans fil (14) ; et
recevoir, en provenance du réseau de communication cellulaire (10), une configuration dynamique d'objectifs de mesure configurés pour une pluralité de ressources de signal CSI-RS comprise dans l'ensemble de ressources de signal CSI-RS, dans lequel le procédé est **caractérisé en ce que :**
lesdits au moins deux objectifs de mesure distincts configurés pour la pluralité de ressources de signal CSI-RS comprennent au moins deux objectifs parmi un groupe constitué par : un objectif de mesure de ressources de signal CSI-RS souhaitées, un objectif de mesure de ressources de signal CSI-RS brouilleuses, et un objectif de mesure de ressources de signal CSI-RS brouilleuses externes, et **en ce qu'**il comprend en outre l'étape ci-dessous consistant à :
rendre compte, dans un rapport, de ladite une ou desdites plusieurs hypothèses de signal CSI-RS préférées, sélectionnées par le dispositif sans fil parmi l'ensemble de ressources de signal CSI-RS, selon les objectifs de mesure pour la pluralité de ressources de signal CSI-RS comprise dans l'ensemble de ressources de signal CSI-RS configuré pour le dispositif sans fil, au réseau de communication cellulaire (10).

9. Procédé selon la revendication 8, comprenant en outre les étapes ci-dessous consistant à :
former une pluralité d'hypothèses de signal CSI-RS à partir de l'ensemble de ressources de signal CSI-RS, sur la base des objectifs de mesure configurés pour la pluralité de ressources de signal CSI-RS comprise dans l'ensemble de ressources de signal CSI-RS ;
calculer une métrique pour chaque hypothèse de la pluralité d'hypothèses de signal CSI-RS ; et
sélectionner une ou plusieurs hypothèses de signal CSI-RS préférées parmi la pluralité d'hypothèses de signal CSI-RS, sur la base des métriques calculées pour la pluralité d'hypothèses de signal CSI-RS.

10. Procédé selon l'une quelconque des revendications 8 à 9, dans lequel la métrique calculée pour chaque hypothèse de la pluralité d'hypothèses de signal CSI-RS est le débit attendu additionné sur toutes les couches de transmission pour une liaison descendante vers le dispositif sans fil (14), de sorte que l'étape de calcul de la métrique pour chaque hypothèse de la pluralité d'hypothèses de signal CSI-RS consiste à calculer, pour chaque hypothèse de signal CSI-RS de la pluralité d'hypothèses de signal CSI-RS, le débit attendu additionné sur toutes les couches de transmission pour la liaison descendante vers le dispositif sans fil (14) selon l'hypothèse de signal CSI-RS.

11. Procédé selon la revendication 10, dans lequel l'étape de sélection de ladite une ou desdites plusieurs hypothèses de signal CSI-RS préférées consiste à sélectionner une ou plusieurs hypothèses de la pluralité d'hypothèses de signal CSI-RS présentant le débit attendu le plus élevé, en tant que ladite une ou lesdites plusieurs hypothèses de signal CSI-RS préférées.

12. Procédé selon l'une quelconque des revendications 8 à 11, comprenant en outre les étapes ci-dessous consistant à :
calculer des valeurs pour une ou plusieurs métriques de rétroaction pour le dispositif sans fil (14), pour chaque hypothèse de ladite une ou desdites plusieurs hypothèses de signal CSI-RS préférées ; et
rendre compte, dans un rapport, des valeurs calculées pour ladite une ou lesdites plusieurs métriques de rétroaction pour le dispositif sans fil (14) pour chaque hypothèse de ladite une ou desdites plusieurs hypothèses de signal CSI-RS préférées, au réseau de communication cellulaire (10).

13. Dispositif sans fil (14) destiné à fonctionner dans un réseau de communication cellulaire (10), moyennant quoi le dispositif sans fil (14) est configuré de manière à :
recevoir, en provenance du réseau de communication cellulaire (10), par l'intermédiaire dudit au moins un émetteur-récepteur (44), une indication d'un ensemble de ressources de signal de référence d'informations d'état de canal, CSI-RS, configuré pour le dispositif sans fil (14) ; et
recevoir, en provenance du réseau de communication cellulaire (10), par l'intermédiaire dudit au moins un émetteur-récepteur (44), une indication d'objectifs de mesure configurés pour une pluralité de ressources de signal CSI-RS comprise dans l'ensemble de ressources de signal CSI-RS, dans lequel le dispositif sans fil (14) est **caractérisé en ce que :**
lesdits au moins deux objectifs de mesure distincts configurés pour la pluralité de ressources de signal CSI-RS comprennent au moins deux objectifs parmi un groupe constitué par : un objectif de mesure de ressources de signal CSI-RS souhaitées, un objectif de mesure de ressources de signal CSI-RS brouilleuses, et un objectif de mesure de ressources de signal CSI-RS brouilleuses externes, et **en ce qu'**il est en outre configuré de manière à rendre compte, dans un rapport, de ladite une ou desdites plusieurs hypothèses de signal CSI-RS préférées, sélectionnées par le dispositif sans fil parmi l'ensemble de ressources de signal CSI-RS, selon les objectifs de mesure pour la pluralité de ressources de signal CSI-RS comprise dans l'ensemble de ressources de signal CSI-RS configuré pour le dispositif sans fil, au réseau de communication cellulaire (10).

14. Dispositif sans fil (14) selon la revendication 13, dans lequel, par l'intermédiaire de l'exécution du logiciel par ledit au moins un processeur (40), le dispositif sans fil (14) est en outre configuré de manière à :
former une pluralité d'hypothèses de signal CSI-RS à partir de l'ensemble de ressources de signal CSI-RS, sur la base des objectifs de mesure configurés pour la pluralité de ressources de signal CSI-RS comprise dans l'ensemble de ressources de signal CSI-RS ;
calculer une métrique pour chaque hypothèse de la pluralité d'hypothèses de signal CSI-RS ; et
sélectionner une ou plusieurs hypothèses de signal CSI-RS préférées parmi la pluralité d'hypothèses de signal CSI-RS, sur la base des métriques calculées pour la pluralité d'hypothèses de signal CSI-RS.

15. Dispositif sans fil (14) selon l'une quelconque des revendications 13 à 14, dans lequel la métrique calculée pour chaque hypothèse de la pluralité d'hypothèses de signal CSI-RS est le débit attendu additionné sur toutes les couches de transmission pour une liaison descendante vers le dispositif sans fil (14).

16. Dispositif sans fil (14) selon la revendication 15, dans lequel ladite une ou lesdites plusieurs hypothèses de signal CSI-RS préférées correspondent à une ou plusieurs hypothèses de la pluralité d'hypothèses de signal CSI-RS présentant le débit attendu le plus élevé.

17. Dispositif sans fil (14) selon l'une quelconque des revendications 14 à 16, dans lequel le dispositif sans fil (14) est en outre configuré de manière à :
calculer des valeurs pour une ou plusieurs métriques de rétroaction pour le dispositif sans fil (14), pour chaque hypothèse de ladite une ou desdites plusieurs hypothèses de signal CSI-RS préférées ; et
rendre compte, dans un rapport, des valeurs calculées pour ladite une ou lesdites plusieurs métriques de rétroaction pour le dispositif sans fil (14) pour chaque hypothèse de ladite une ou desdites plusieurs hypothèses de signal CSI-RS préférées, au réseau de communication cellulaire (10).
